# EUROPEAN PATENT SPECIFICATION

(11) **EP 3 544 917 B1**
(45) Date of publication and mention of the grant of the patent: **24.02.2021**
(21) Application number: 17817259.9
(22) Date of filing: 23.11.2017
(51) Int. Cl.: B65H 5/02, B65H 5/22, B65H 7/14

(54) **OBJECT PROCESSING SYSTEM INCLUDING A CONVEYOR BELT**
OBJEKTVERARBEITUNGSSYSTEM MIT EINEM FÖRDERBAND
SYSTÈME DE TRAITEMENT D'OBJETS COMPRENANT UNE BANDE TRANSPORTEUSE

(30) Priority: 23.11.2016 NL 2017851
(43) Date of publication of application: 02.10.2019
(73) Proprietor: C.C.M. Beheer B.V., 5674 CC Nuenen (NL)
(72) Inventor: VAN OOIK, Gert, 5673 AX Nuenen (NL); PULLES, Rob, 5066 EP Moergestel (NL)
(74) Representative: EP&C
(86) International application number: PCT/NL2017/050766
(87) International publication number: WO 2018/097717

(56) References cited:
- EP-A1- 1 522 414
- EP-A1- 3 028 969
- US-A- 5 300 961
- US-A1- 2005 078 015
- US-A1- 2006 061 612

## Description

For accurate transport and positioning of objects an endless steel conveyer belt can be used. Accurate transport is required if the object is processed in multiple steps at multiple locations.

For instance in inkjet printing an image is created on a substrate by subsequently printing multiple colours at multiple positions while the substrate moves. In order to measure the substrate position accurately, the position of the steel belt - that carries and holds the substrate - can be measured. The position of the belt is a direct measure for the position of the substrate.

A typical example is an industrial inkjet printer that consists of number of print heads each printing a specific colour (e.g. yellow, magenta, cyan or black). A substrate (e.g. a sheet of paper, carton or foil) is transported at a constant speed under the print heads that are mounted statically at different positions (in transport direction). The image is built up colour by colour subsequently by the print heads. The distance between the print heads is compensated by delaying the triggering of the print heads. Delaying is done in the position domain rather than in the time domain.

Substrate position on a conveyer belt is often measured by means of a measuring wheel on the belt or the substrate or an encoder in one of the driving rolls. These methods are indirect and show typical inaccuracies due to slip between roll or wheel and substrate or diameter variations (typical inaccuracies of 50 to 100 µm).

The present invention relates to a system wherein the belt position is measured by applying an encoder scale that can be read with a standard encoder head. The system uses a direct way to measure the position of the belt that carries the substrate in order to overcome the disadvantages of the indirect measuring methods and typically achieves an inaccuracy < 10 µm.

In particular the invention relates to an object processing system according to the preamble of claim 1.

Such an object processing system is known from US 2005/0078015.

JP-A-2005350195 discloses a system with a conveyor belt where two encoder sensors for detecting an encoder scale on the belt are provided such that an output signal, which is used for controlling the conveying speed of the belt, constantly is switched to an output signal of the other sensor when a discontinuous portion of the markers, such as a joint of the belt, or lack of a pulse caused by dust or damage is detected on the basis of an output signal of one sensor.

US 2009/256615 also discloses a system comprising a conveyor belt with an encoder scale and two encoder sensors. In this known system the encoder scale is a magnetic encoder scale.

The invention relates to an object processing system according to the preamble of claim 1, wherein the conveyor belt is a steel belt in which the encoder scale is provided on an upper surface of the belt, wherein the encoder scale comprises alternating marker sections and voids with a pitch (p), wherein the marker sections are composed of markers engraved in the belt surface at regular intervals, and wherein the distance (*d_{enc}*) between the first and second encoder *d_{enc} ≠ N·p*, *N* being an integer.

In practice it is very difficult/expensive to manufacture an endless laser engraved encoder scale on a (large) steel belt. Therefore, according to the invention the encoder scale is composed of multiple sections separated by voids. In order to obtain continuous position information, while there are voids in the encoder scale, two encoder heads are used. The information of both encoder heads are combined seamlessly into one position signal by an encoder signal processing unit.

In a practical embodiment of the system according to the invention, the encoder signal processing unit comprises a Field Programmable Gate Array (FPGA).

In a further embodiment of the system according to the invention, the encoder signal processing unit is adapted and configured to sample the (sine/cosine) encoder signals of the encoder heads, and is adapted and configured to digitize and interpolate the sampled signals at high frequency to obtain a continuous position signal, wherein the amplitudes are obtained from the digitized encoder signals, which amplitudes are compared to an associated predetermined threshold value, wherein if the amplitude of one of the encoder signals is below its associated threshold value, the other encoder signal is used for the determination of the belt position signal, and wherein if the amplitudes of both the encoder signals are below their respective associated threshold values, the belt position signal is extrapolated based on a position setpoint signal.

In particular the FPGA consist of a strategy that can detect and handle the loss of one or even both of the encoder signals. The encoder signals are lost when the encoder scale becomes contaminated or when the encoder head is above a void in the encoder scale. The invention also relates to a method in which a thermal expansion correction factor is determined using two encoder heads and an encoder scale, and in which said factor is used to calculate a thermally compensated belt position signal, as is described in the above.

An embodiment of the object processing system according to the invention is provided with a lateral substrate position control. The lateral substrate position on a conveyer belt is often measured by means of an optical edge sensor that senses the belt edge. The sensor generates an output signal that is proportional with the lateral position of the belt edge.

In simple belt steering systems it is assumed that the belt edge is straight and the belt is steered such that the belt edge is kept at a constant lateral position. More advanced systems calibrate the unstraightness of the belt edge first and store it in a belt edge correction table. The sensor value is corrected first with the correction before is sent to the belt steering system. Systems with a belt edge correction table are much more accurate than uncorrected systems but are sensitive for damage or contamination of the belt edge.

In a further aspect of the system according to the invention the conveyor belt is furthermore provided in its conveying direction with an absolute encoder pattern parallel to an edge of the belt for lateral position determining purposes and the system furthermore includes a lateral position encoder comprising at least one lateral encoder head to observe the absolute encoder pattern on the conveyor belt, wherein the encoder signal processing unit is connected to the lateral encoder head, the encoder signal processing unit being adapted and configured to receive encoder signals from the at least one lateral encoder head, and to generate a lateral belt position signal derived from the encoder signals, which lateral belt position signal serves as an input signal for the control unit.

Preferably the absolute encoder pattern comprises absolute encoder pattern sections which are located in series in the longitudinal direction of the conveyor belt and which are separated by a gap.

The lateral position encoder preferably comprises multiple encoder heads.

The absolute encoder pattern is preferably engraved, in particular laser engraved, in an upper surface of the belt.

According to this above mentioned aspect of the system of the invention the lateral position of the belt is measured by means of an absolute encoder. An absolute encoder pattern is provided, preferably engraved, parallel to the belt edge on/in the belt surface. In a preferred embodiment the pattern is divided in encoder pattern sections and the lateral position of the belt is measured by multiple encoder heads to add redundancy and to handle the loss of signal around begin and end of the pattern sections. The absolute encoder pattern will not parallel to the ideal line of the belt but has a deviation that is dependent on the transport position of the belt. The deviation though will not change over time and can be calibrated once. The calibration data can be used to correct the measured encoder position.

Thus, according to this aspect a different technique is used to measure the lateral position. An absolute encoder pattern is engraved on the belt and read by encoder heads. Although the encoder pattern cannot be applied perfectly straight the pattern will not change over time and the unstraightness can be calibrated once.

The processing unit in the system according to the invention may be a printer unit, in particular an inkjet printing unit, or may be an engraving unit, in particular a laser engraving unit.

The system according to the invention will be further elucidated with reference to an embodiment by way of example shown in the drawing, in which:
Fig. 1 illustrates schematically an inkjet printing system with a conveyor belt according to the invention,
Fig. 2 shows the printing system of Fig. 1 illustrating an optimal overlay (Fig. 2A) and a non-optimal overlay (Fig. 2B),
Fig. 3 illustrates an encoder track provided on the conveyor belt and a typical encoder signal amplitude plot resulting therefrom,
Fig. 4 illustrates in a block diagram the encoder heads and the encoder signal processing components of the system of Fig. 1, and
Fig. 5 illustrates schematically a lateral edge portion of a conveyor belt with encoder patterns for position measuring in conveying direction and lateral direction of the belt.

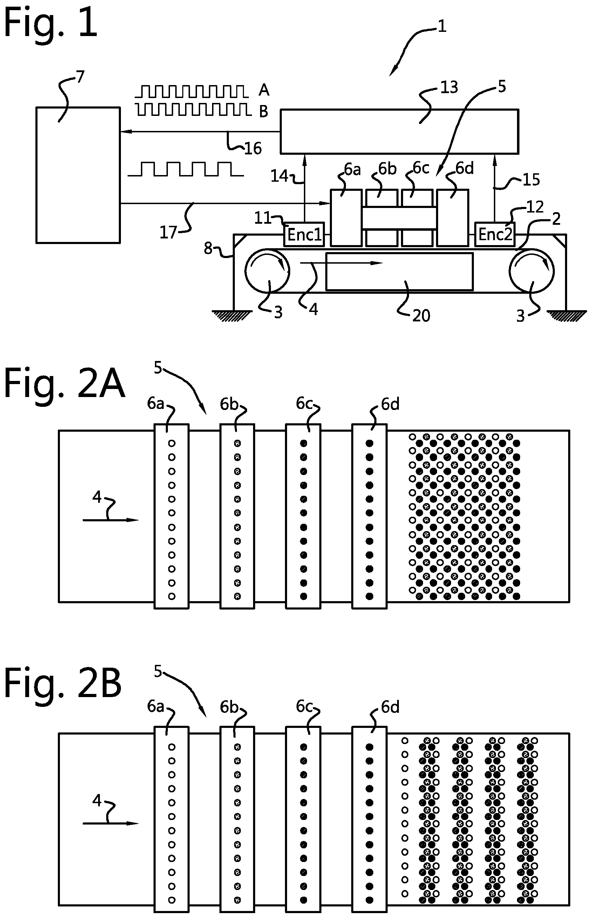

In Fig. 1 is shown an inkjet printing system 1 as an example of an object processing system according to the invention.

The printing system 1 comprises a conveyor belt 2 running around at least two rollers 3 and having a conveying direction indicated with arrow 4. On this conveyor belt 2 substrates can be held and positioned under a stationary printing station 5. For printing applications often a metal suction belt with perforations can be used. A substrate is held on the belt 2 by applying a vacuum under the belt 2 by means of a vacuum box 20 whereby a suction force is applied through the perforations of the belt 2 on the underside of the substrate.

The printing station 5 is mounted on a metrology frame 8 and has printing heads 6a - 6d, for example in the colors magenta, yellow, cyan and black. Images to be printed are composed of these colors. The print heads 6a - 6d jet ink drops subsequently. If the position interval based triggering of the print heads 6a - 6d is optimal the ink drops have a correct mutual spacing, which is called optimal overlay and is illustrated in Fig 2A. If the mutual spacing of the ink drops is not correct the image becomes irregular, which is an non-optimal overlay illustrated in Fig 2B.

The system 1 comprises a motion control unit 7 adapted and configured to control the movement of the conveyor belt 2 to position the substrate to be printed under the printing station 5 and to trigger the jetting of the ink by the inkjet heads 6a - 6d.

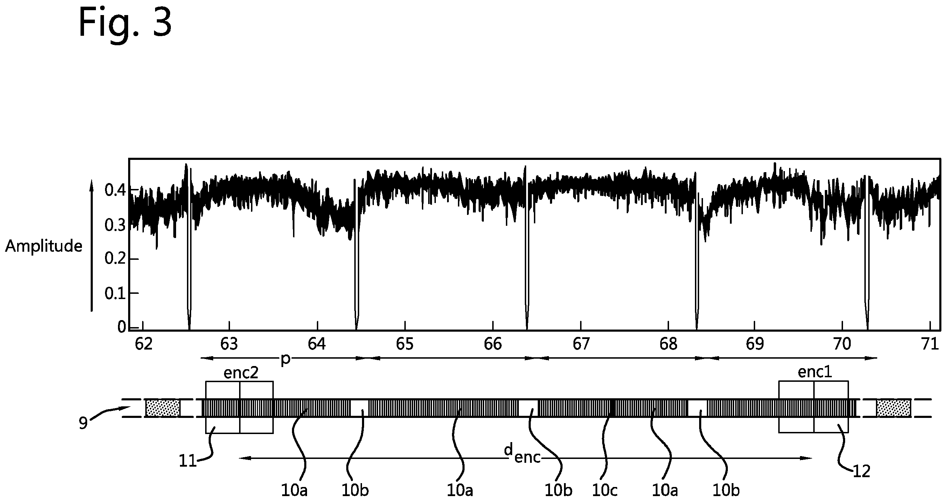

The position of the belt 2 is a direct measure of a substrate on the belt 2. In order to obtain the position of a substrate in the conveying direction 4, the conveyor belt 2 is provided in its conveying direction 4 with a (linear) encoder scale 9 illustrated in Fig. 3. On a metal belt 2, the encoder scale 9 can comprise markers that are engraved, preferably by a laser, in the upper surface of the belt 2, preferably near a lateral edge of the belt 2. In the embodiment shown, the encoder scale 9 comprises alternating marker sections 10a and voids 10b with a pitch (p) as can be seen in Fig. 3. The marker sections 10 are composed of markers at regular intervals and thus provide a linear scaling.

The system 1 furthermore includes a position encoder comprising a first encoder head 11 and a second encoder head 12 arranged at a distance (*d_{enc}*) from each other along the conveying direction 4 to observe the encoder scale 9 on the conveyor belt 2. The encoder heads 11 and 12 trigger a pulse signal each time a marker on the scale 9 is detected. The encoder heads 11, 12 are mounted on the metrology frame 8.

The distance between the first and second encoder *d_{enc} ≠ N*·*p*, wherein *N* is an integer, such that the encoder heads 11 and 12 never detect a void 10b at the same time.

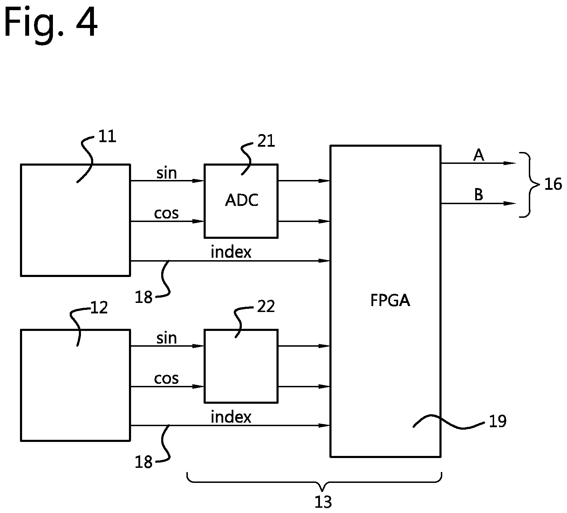

The encoder furthermore comprises an encoder signal processing unit 13 connected to the first and second encoder heads 11, 12 and to the control unit 7. A practical embodiment of the encoder signal processing unit 13 is shown in Fig. 4 and comprises a Field Programmable Gate Array (FPGA) 19 and for each encoder head 11, 12 an analog-digital converter 21 and 22, respectively.

The encoder signal processing unit 13 receives first and second encoder signals 14, 15 from the first and second encoder heads 11, 12, respectively. The encoder signal processing unit 13 is programmed to generate a belt position signal (encoder output) 16 derived from the first and second encoder signals 14, 15. The belt position signal 16 is an incremental encoder output signal and serves as an input signal for the control unit 7 that generates a print head trigger signal 17 for the triggering of the print heads 6a - 6d.

The accuracy of the measurement of the belt position may be compromised by thermal expansion in the device. Thermal expansion of the machine frame 8 and/or the steel belt 2 can lead to position deviations. A stainless steel belt has typical thermal expansion coefficient of 18 µm/m/K which means that a 1 m long part of a stainless steel conveyer belt expands 18 µm if it heats up 1 K. For inkjet printing at 1200 dpi accuracy better than 10 µm is required.

The encoder signal processing unit 13 is programmed to determine a thermal expansion correction factor and to calculate the belt position signal 16 using the thermal expansion correction factor such that the belt position signal 16 comprises a fixed number of encoder pulses over the distance (*d_{enc}*) between the first and second encoder head 11, 12.

An index marker 10c is provided in the encoder scale (see Fig. 3) of the conveyor belt 2. The encoder heads 11, 12 are adapted and configured to generate an index pulse 18 (see Fig. 4) when they detect the index marker 10c. The correction factor is calculated as the ratio between the expected number of encoder pulses between the first index pulse generated by the first encoder head 11 and the second index pulse generated by the second encoder head 12 and the actually measured number of encoder pulses counted between the first index pulse generated by the first encoder head 11 and the second index pulse generated by the second encoder head 12. It is noted that instead of one index marker per revolution on the belt, as is shown in Fig. 3, it is also conceivable that multiple index markers are provided.

Thermal expansion affects the accuracy of the overlay between multiple process steps (e.g. inkjet printing) in two ways:
1. The thermal expansion of the conveyer belt 2 results in expansion of the engraved encoder scale 9 and therefore the actual measured belt displacement.
2. The thermal expansion of the frame 8 carrying the process modules (e.g. inkjet print heads) results in enlargement of the mutual distance between process modules 6a - 6d. The overlay between subsequent process steps is determined by deviation of the distance between process modules 6a - 6d.

The combination of both thermal effects determines the accuracy rather than the individual contributions. If for example the frame 8 has the same relative expansion as the belt 2 the position drift is zero. The invention compensates the combined thermal expansion effect.

In the practical embodiment of Fig. 4 the encoder signal processing unit 13 is adapted and configured to sample the (sine/cosine) encoder signals of the encoder heads 11, 12. The samples are digitized by the AD converters 21, 22 and interpolated at high frequency to obtain a continuous position signal. The amplitudes are obtained from the digitized encoder signals, which is shown in Fig. 3. The amplitudes are compared to an associated predetermined threshold value, wherein if the amplitude of one of the encoder signals 14, 15 is below its associated threshold value, the other encoder signal 14, 15 is used for the determination of the belt position signal 16. If the amplitudes of both the encoder signals 14, 15 are below their respective associated threshold values, the belt position signal 16 is extrapolated based on a position setpoint signal.

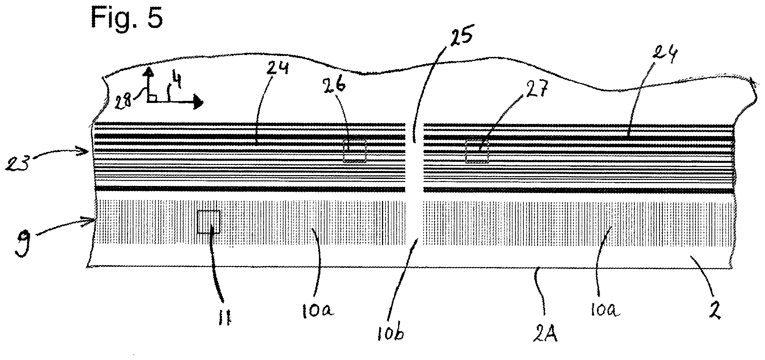

In a further embodiment a lateral substrate position control can be added to the object processing system according to the invention. The lateral direction is the direction perpendicular to the conveying direction 4 of the belt 2 and is indicated in Fig. 5 by reference numeral 28. The lateral position of the substrate held on the belt 2 can be controlled by means of one or more actuators that are not described in detail here, but which can move the belt 2 to some extent in the lateral direction as is for example described in WO 2012/021059 and WO2018097709. The lateral position control system furthermore comprises a encoder to determine the position of the edge of the belt which can be used as an input to control the actuator(s).

In Fig. 5 a lateral edge section of a belt 2 is shown. The lateral edge of the belt 2 is indicated by reference numeral 2A. Close to the edge 2A the belt 2 has an encoder scale 9 comprising alternating marker sections 10a and voids 10b, as was also shown in Fig. 3. This encoder scale 9 is an incremental pattern for the position measurement of the belt in the conveying direction 4 of the belt 2. There is shown one encoder head 11 for observation of the encoder scale 9, but there can also be two encoder heads as was described in the above with reference to Fig. 3. The position control in the conveying direction 4 thus uses an incremental encoder.

Adjacent to the encoder scale 9, closer to the centre of the belt 2, a second pattern 23 is provided. This pattern 23 is an absolute encoder pattern 23. The absolute encoder pattern 23 comprises lines parallel to the belt edge 2A, preferably engraved in the belt surface. The lines may have different thicknesses as is illustrated in Fig. 5. The absolute encoder pattern 23 has pattern sections 24 in seen in the conveying direction 4. The pattern sections 24 are separated by a void 25.

The lateral position of the belt 2 is measured by multiple encoder heads, in the figure two encoder heads 26, 27 which observe the absolute encoder pattern 23. The two encoder heads 26 and 27 add redundancy to the lateral encoder system. Furthermore the two encoder heads 26, 27 allows the encoder system to handle the loss of signal around begin and end of the sections 24.

The encoder heads 26, 27 are connected to an encoder signal processing unit and to a control unit. The encoder signal processing unit and control unit for the lateral positioning may be incorporated in the encoder signal processing unit 13 and control unit 7 as shown in Fig. 1. However, the lateral position control system may also have different or separate components for signal processing and control of the actuator(s).

The absolute encoder track 23 will not parallel to the ideal line of the belt 2 but has a deviation that is dependent on the position of the belt 2 in the conveying direction 4. The deviation though will not change over time and can be calibrated once. The calibration data can be used to correct the measured encoder position. The accuracy of the absolute encoder system is better than 0.1 µm over short distances. Typical unstraightness of the encoder track is better than 1mm so the operating range for the encoder is indeed over a short distance.

It must be understood that the lateral substrate position control including an absolute encoder is in this description combined with the motion control in the conveying direction according to other aspects of the invention which include an incremental encoder. It is however conceivable to use the aspect of the lateral substrate position control described herein with another embodiment of a motion control system of the belt than is described in this application.

## Claims

1. An object processing system (1) including a conveyor belt (2) running around at least two rollers (3) and having a conveying direction (4), a stationary processing unit (5) adapted to process an object disposed on the conveyor belt (2), and a control unit (7) adapted and configured to control the movement of the conveyor belt (2) to position the object at the processing unit (5) and to trigger action of the processing unit (5),
wherein the conveyor belt (2) is provided in its conveying direction with a linear encoder scale (9) for position determining purposes and the system furthermore includes a position encoder comprising a first encoder head (11) and a second encoder head (12) arranged at a distance (*d_{enc}*) from each other along the conveying direction (4) to observe the encoder scale (9) on the conveyor belt (2), as well as an encoder signal processing unit (13) connected to the first and second encoder heads (11, 12) and to the control unit (7),
the encoder signal processing unit (13) being adapted and configured , i.e. programmed, to receive first and second encoder signals, i.e. pulses, from the first and second encoder heads (11, 12), respectively, and to generate a belt position signal , i.e. encoder output, derived from the first and second encoder signals, which belt position signal serves as an input signal for the control unit (7),
**characterized in that**
the conveyor belt (2) is a steel belt in which the encoder scale (9) is provided on an upper surface of the belt (2), wherein the encoder scale (9) comprises alternating marker sections (10a) and voids (10b) with a pitch (p), wherein the marker sections (10a) are composed of markers engraved in the belt surface at regular intervals, and wherein the distance (*d_{enc}*) between the first (11) and second encoder (12) is *d_{enc} ≠ N·p, N* being an integer.

2. System according to claim 1, wherein the encoder signal processing unit (13) comprises a Field Programmable Gate Array (FPGA) (19).

3. System according to claim 1 or 2, wherein the encoder signal processing unit (13) is adapted and configured to sample the encoder signals of the encoder heads (11, 12), and is adapted and configured to digitize and interpolate the sampled signals at high frequency to obtain a continuous position signal, wherein the amplitudes are obtained from the digitized encoder signals, which amplitudes are compared to an associated predetermined threshold value, wherein if the amplitude of one of the encoder signals is below its associated threshold value, the other encoder signal is used for the determination of the belt position signal, and wherein if the amplitudes of both the encoder signals are below their respective associated threshold values, the belt position signal is extrapolated based on a position setpoint signal.

4. System according to any of the preceding claims, wherein the conveyor belt (2) is furthermore provided in its conveying direction (4) with an absolute encoder pattern (23) parallel to an edge (2A) of the belt (2) for lateral position determining purposes and the system furthermore includes a lateral position encoder comprising at least one lateral encoder head (26, 27) to observe the absolute encoder pattern (23) on the conveyor belt (2), wherein the encoder signal processing unit (13) is connected to the lateral encoder head (26, 27), the encoder signal processing unit (13) being adapted and configured to receive encoder signals from the at least one lateral encoder head (26, 27), and to generate a lateral belt position signal derived from the encoder signals, which lateral belt position signal serves as an input signal for the control unit (7).

5. System according to claim 4, wherein the absolute encoder pattern (23) comprises absolute encoder pattern sections (24) which are located in series in the longitudinal direction of the conveyor belt (2) and which are separated by a gap (25).

6. System according to claim 4 or 5, wherein the lateral position encoder comprises multiple encoder heads (26, 27).

7. System according to any of the claims 4-6, wherein the absolute encoder pattern is engraved, in particular laser engraved, in an upper surface of the belt (2).

8. System according to any one of the preceding claims, wherein the processing unit (5) is a printer unit, in particular an inkjet printing unit.

9. System according to any one of the claims 1-7, wherein the processing unit is an engraving unit, in particular a laser engraving unit.

## Patentansprüche

1. Objektverarbeitungssystem (1), umfassend ein Förderband (2), das um mindestens zwei Walzen (3) läuft und eine Förderrichtung (4) aufweist, eine stationäre Verarbeitungseinheit (5), die geeignet ist, um ein Objekt zu verarbeiten, das auf einem Förderband (2) angeordnet ist, und eine Steuereinheit (7), die geeignet und dafür ausgelegt ist, um die Bewegung des Förderbands (2) zu steuern, um das Objekt in der Verarbeitungseinheit (5) zu positionieren und um die Aktion der Verarbeitungseinheit (5) auszulösen,
wobei das Förderband (2) in seiner Förderrichtung mit einer linearen Codierskala (9) für Positionsbestimmungszwecke versehen ist, und das System ferner einen Positionscodierer aufweist, umfassend einen ersten Codierkopf (11) und einen zweiten Codierkopf (12), die in einer Distanz (d_{enc}) voneinander in der Förderrichtung (4) angeordnet sind, um die Codierskala (9) auf dem Förderband (2) zu beobachten, sowie eine Codiersignal-Verarbeitungseinheit (13), die mit dem ersten und zweiten Codierkopf (11, 12) und mit der Steuereinheit (7) verbunden ist,
wobei die Codiersignal-Verarbeitungseinheit (13) geeignet und dafür ausgelegt ist, d.h. programmiert ist, um ein erstes und zweites Codiersignal, d.h. Impulse, von dem ersten bzw. zweiten Codierkopf (11, 12) zu empfangen, und um ein Bandpositionssignal, d.h. einen Codierausgang, der von dem ersten und zweiten Codiersignal abgeleitet ist, zu generieren, wobei das Bandpositionssignal als Eingangssignal für die Steuereinheit (7) dient,
**dadurch gekennzeichnet, dass**
das Förderband (2) ein Stahlband ist, in dem die Codierskala (9) auf einer oberen Fläche des Bands (2) bereitgestellt ist, wobei die Codierskala (9) abwechselnde Markerabschnitte (10a) und Leerräume (10b) mit einem Abstand (p) umfasst, wobei die Markerabschnitte (10a) aus Markern bestehen, die in die Bandfläche in regelmäßigen Intervallen graviert sind, und wobei die Distanz (d_{enc}) zwischen dem ersten (11) und zweiten Codierer (12) d_{enc} *≠* N·p ist, wobei N eine ganze Zahl ist.

2. System nach Anspruch 1, wobei die Codiersignal-Verarbeitungseinheit (13) ein feldprogrammierbares Gate-Array (FPGA) (19) umfasst.

3. System nach Anspruch 1 oder 2, wobei die Codiersignal-Verarbeitungseinheit (13) geeignet und dafür ausgelegt ist, um die Codiersignale der Codierköpfe (11, 12) abzutasten, und geeignet und dafür ausgelegt ist, um die abgetasteten Signale bei hoher Frequenz zu digitalisieren und zu interpolieren, um ein kontinuierliches Positionssignal zu erhalten, wobei die Amplituden aus den digitalisierten Codiersignalen erhalten werden, wobei die Amplituden mit einem assoziierten vorherbestimmten Schwellenwert verglichen werden, wobei, wenn die Amplitude eines der Codiersignale unter ihrem assoziierten Schwellenwert liegt, das andere Codiersignal zur Bestimmung des Bandpositionssignals verwendet wird, und wobei, wenn die Amplituden beider Codiersignale unter ihren jeweiligen assoziierten Schwellenwerten liegen, das Bandpositionssignal auf der Basis eines Positionseinstellpunktsignals extrapoliert wird.

4. System nach einem der vorhergehenden Ansprüche, wobei das Förderband (2) ferner in seiner Förderrichtung (4) mit einem absoluten Codiermuster (23) parallel zu einem Rand (2A) des Bands (2) für laterale Positionsbestimmungszwecke versehen ist, und das System ferner einen lateralen Positionscodierer aufweist, der mindestens einen lateralen Codierkopf (26, 27) umfasst, um das absolute Codiermuster (23) auf dem Förderband (2) zu beobachten, wobei die Codiersignal-Verarbeitungseinheit (13) mit dem lateralen Codierkopf (26, 27) verbunden ist, wobei die Codiersignal-Verarbeitungseinheit (13) geeignet und dafür ausgelegt ist, um Codiersignale von dem mindestens einen lateralen Codierkopf (26, 27) zu empfangen, und um ein laterales Bandpositionssignal zu generieren, das von den Codiersignalen abgeleitet ist, wobei das laterale Bandpositionssignal als Eingangssignal für die Steuereinheit (7) dient.

5. System nach Anspruch 4, wobei das absolute Codiermuster (23) absolute Codiermusterabschnitte (24) umfasst, die in Serie in der Längsrichtung des Förderbands (2) angeordnet sind, und die durch einen Spalt (25) getrennt sind.

6. System nach Anspruch 4 oder 5, wobei der laterale Positionscodierer mehrere Codierköpfe (26, 27) umfasst.

7. System nach einem der Ansprüche 4 bis 6, wobei das absolute Codiermuster in eine obere Fläche des Bands (2) graviert, insbesondere lasergraviert, ist.

8. System nach einem der vorhergehenden Ansprüche, wobei die Verarbeitungseinheit (5) eine Druckereinheit, insbesondere eine Tintenstrahl-Druckeinheit, ist.

9. System nach einem der Ansprüche 1 bis 7, wobei die Verarbeitungseinheit eine Gravureinheit, insbesondere eine Lasergravureinheit, ist.

## Revendications

1. Système (1) de traitement d'objet comprenant une bande (2) transporteuse tournant autour d'au moins deux rouleaux (3) et ayant une direction de transport (4), une unité de traitement stationnaire (5) adaptée pour traiter un objet disposé sur la bande (2) transporteuse, et une unité de commande (7) adaptée et configurée pour commander le mouvement de la bande (2) transporteuse pour positionner l'objet au niveau de l'unité de traitement (5) et pour déclencher l'action de l'unité de traitement (5),
dans lequel la bande (2) transporteuse est pourvue dans sa direction de transport d'une échelle (9) linéaire de codeur à des fins de détermination de position et le système comprend en outre un codeur de position comprenant une première tête de codeur (11) et une deuxième tête de codeur (12) disposées à une distance (d_{enc}) l'une de l'autre le long de la direction de transport (4) pour observer l'échelle (9) de codeur sur la bande (2) transporteuse, ainsi qu'une unité de traitement de signal de codeur (13) connectée aux première et deuxième têtes de codeur (11, 12) et à l'unité de commande (7), l'unité de traitement de signal de codeur (13) étant adaptée et configurée, c'est-à-dire programmée, pour recevoir des premier et second signaux de codeur, c'est-à-dire des impulsions, des première et deuxième têtes de codeur (11, 12), respectivement, et pour générer un signal de position de bande, c'est-à-dire une sortie de codeur, dérivé des premier et deuxième signaux de codeur, lequel signal de position de bande sert de signal d'entrée pour l'unité de commande (7), **caractérisé en ce que**
la bande (2) transporteuse est une bande en acier dans laquelle l'échelle (9) de codeur est prévue sur une surface supérieure de la bande (2), dans laquelle l'échelle (9) de codeur comprend en alternance des sections de marqueur (10a) et des espaces vides (10b) avec un pas (p), dans lequel les sections de marqueur (10a) sont composées de marqueurs gravés dans la surface de la bande à intervalles réguliers, et dans lequel la distance (d_{enc}) entre le premier (11) et le deuxième (12) codeurs est d_{enc} *≠* N·p, N étant un entier.

2. Système selon la revendication 1, dans lequel l'unité de traitement de signal de codeur (13) comprend un réseau de portes logiques programmables (FPGA) (19).

3. Système selon la revendication 1 ou 2, dans lequel l'unité de traitement de signal de codeur (13) est adaptée et configurée pour échantillonner les signaux de codeur des têtes de codeur (11, 12), et est adaptée et configurée pour numériser et interpoler les signaux échantillonnés à haute fréquence pour obtenir un signal de position continu, dans lequel les amplitudes sont obtenues à partir des signaux de codeur numérisés, lesquelles amplitudes sont comparées à une valeur de seuil prédéterminée associée, dans laquelle, si l'amplitude de l'un des signaux de codeur est inférieure à sa valeur de seuil associée, l'autre signal de codeur est utilisé pour la détermination du signal de position de bande, et dans lequel, si les amplitudes des deux signaux de codeur sont inférieures à leurs valeurs de seuil associées respectives, le signal de position de bande est extrapolé sur la base d'un signal de consigne de position.

4. Système selon l'une quelconque des revendications précédentes, dans lequel la bande (2) transporteuse est en outre pourvue dans sa direction de transport (4) d'un motif (23) de codeur absolu parallèle à un bord (2A) de la bande (2) à des fins de détermination de position latérale et le système comprend en outre un codeur de position latérale comprenant au moins une tête de codeur (26, 27) latérale pour observer le motif (23) de codeur absolu sur la bande (2) transporteuse, dans lequel l'unité de traitement de signal de codeur (13) est connectée à la tête de codeur (26, 27) latérale, l'unité de traitement de signal de codeur (13) étant adaptée et configurée pour recevoir des signaux de codeur de la au moins une tête de codeur (26, 27) latérale, et pour générer un signal de position latérale de bande dérivé des signaux du codeur, lequel signal de position latérale de bande sert de signal d'entrée pour l'unité de commande (7).

5. Système selon la revendication 4, dans lequel le motif (23) de codeur absolu comprend des sections (24) de motif de codeur absolu qui sont situées en série dans la direction longitudinale de la bande (2) transporteuse et qui sont séparées par un espace (25).

6. Système selon la revendication 4 ou 5, dans lequel le codeur de position latérale comprend plusieurs têtes de codeur (26, 27).

7. Système selon l'une quelconque des revendications 4 à 6, dans lequel le motif de codeur absolu est gravé, en particulier gravé au laser, dans une surface supérieure de la bande (2).

8. Système selon l'une quelconque des revendications précédentes, dans lequel l'unité de traitement (5) est une unité d'impression, en particulier une unité d'impression à jet d'encre.

9. Système selon l'une quelconque des revendications 1 à 7, dans lequel l'unité de traitement est une unité de gravure, en particulier une unité de gravure laser.
